# FASCICULE DE BREVET EUROPEEN

(11) **EP 1 805 586 B1**
(45) Date de publication et mention de la délivrance du brevet: **28.06.2017**
(21) Numéro de dépôt: 05815656.3
(22) Date de dépôt: 24.10.2005
(51) Int. Cl.: G06F 3/0482, H04N 5/445, H04N 21/431, H04N 21/472, H04N 21/482

(54) **PROCEDE DE SELECTION D'UN BOUTON DANS UNE BARRE GRAPHIQUE, ET RECEPTEUR METTANT EN OEUVRE LE PROCEDE**
VERFAHREN ZUR AUSWAHL EINER SCHALTFLÄCHE IN EINEM GRAFIKBALKEN UND EMPFÄNGER ZUM AUSFÜHREN DES VERFAHRENS
METHOD FOR SELECTING A BUTTON IN A GRAPHIC BAR AND RECEIVER FOR CARRYING OUT SAID METHOD

(30) Priorité: 28.10.2004 FR 0452472
(43) Date de publication de la demande: 11.07.2007
(73) Titulaire: Thomson Licensing, 92130 Issy-les-Moulineaux (FR)
(72) Inventeur: MARTIN, Jérôme, F-75015 PARIS (FR); DARTIGUES, Hervé, F-75019 PARIS (FR)
(74) Mandataire: Huchet, Anne
(86) Numéro de dépôt international: PCT/FR2005/050892
(87) Numéro de publication internationale: WO 2006/045980

(56) Documents cités:
- EP-A- 1 251 515
- EP-A- 1 304 611
- US-A- 5 664 133
- US-A- 5 914 716
- US-A1- 2003 113 100
- ANONYMOUS: "Automatic Selection with Mouse Pointer" IBM TECHNICAL DISCLOSURE BULLETIN, vol. 38, no. 10, 1 octobre 1995 (1995-10-01), pages 549-550, XP002405098 New York, US

## Description

L'invention concerne un procédé de sélection de boutons affichés dans une barre sur un écran de visualisation et un récepteur muni d'une interface utilisateur utilisant le procédé.

Une interface utilisateur utilise généralement des données descriptives pour élaborer des menus susceptibles d'être affichés sur un écran de télévision, ces données permettent entre autres à l'utilisateur de filtrer des contenus audiovisuels et de choisir celui qui l'intéresse. La norme MPEG-7 spécifie des données descriptives associées à des contenus audiovisuels. La norme MPEG-7 est distribuée par l'ISO sous la référence ISO/IEC JTC1/SC29/WG11 - N5525 éditée en mars 2003. Si ces contenus sont reçus d'un réseau de diffusion, les données descriptives sont mémorisées dans une base de données locale et constamment mise à jour en fonction des contenus accessibles sur le réseau. D'autres données descriptives existent également d'autres supports tels que des PVR (selon la terminologie anglaise : « Personal Video Recorder »). Les contenus audiovisuels peuvent aussi être téléchargés à la demande de l'utilisateur d'un réseau bidirectionnel. Dans ce cas, l'utilisateur reçoit un catalogue, choisit dans celui-ci le contenu qui l'intéresse et active son téléchargement dans la mémoire de son appareil. Les données descriptives des contenus sont enregistrées dans une base de données et regroupées selon certains critères tels que : le thème, la langue, le niveau de moralité, ..etc.

Un Guide électronique de Programme (EPG en abrégé) permet entre autre de sélectionner un contenu audiovisuel parmi une liste affichée sur un écran ou des fonctions à appliquer sur un ou plusieurs contenus. Lorsqu'un grand nombre de contenus audiovisuels est accessible à partir du terminal, il est nécessaire de sélectionner certaines catégories. Une façon simple est d'afficher une barre de menu (en anglais « bargraph ») comportant des boutons sous la forme d'une case contenant un mot clef ou un icône correspondant à chaque catégorie ; l'utilisateur va déplacer un index de bouton en bouton afin de mettre en évidence la catégorie qu'il souhaite, puis la sélectionner.

La navigation sur les éléments d'une barre de boutons est généralement limitée à deux directions : si la barre de boutons est disposée horizontalement, la navigation s'effectue à droite ou à gauche, si la barre de boutons est verticale, la navigation s'effectue vers le haut ou vers le bas. Une façon connue consiste à effectuer le déplacement en activant la touche de navigation d'une télécommande correspondant à cette direction. Cette navigation est notamment décrite dans le brevet FR 2 752 314 déposé par la demanderesse et publiée le 15 janvier 1999. Mais là aussi, on peut trouver un grand nombre de catégories et la navigation peut devenir fastidieuse, l'utilisateur fait défiler un grand nombre d'éléments avant de trouver celui qu'il cherche.

La demande EP 251 515 décrit une méthode pour sélectionner une position au sein d'une séquence. Des images clefs sont extraites de la séquence et affichées sous forme d'icônes sélectionnables. L'icône au centre permet de lire à vitesse normale, les icônes à gauche et à droite permettent d'avancer et reculer le défilement des images à des vitesses plus ou moins grandes. Les icônes à l'extrême gauche et à l'extrême droite permettent de positionner la vidéo soit au début de la séquence, soit à la fin de la séquence. Cet art antérieur enseigne qu'un nombre limité d'icônes apparaît sur la barre d'icônes, Lorsqu'un utilisateur active une icône à un bout de la barre, cela n'est pas fastidieux de revenir à une position médiane en repassant par les mêmes icônes. Ce n'est pas le cas lorsque la liste d'éléments est longue et qu'à partir d'un élément donné, l'utilisateur désire sélectionner un autre élément situé à un endroit de la liste assez loin.

L'invention présente une nouvelle manière de sélectionner un bouton à partir d'une barre de bouton, permettant d'atteindre plus facilement et plus rapidement des fonctions ou éléments en évitant certaines répétitions de commandes de navigation pour atteindre un résultat donné.

L'invention a pour objet un procédé de sélection de boutons affichés dans une barre graphique sur un écran, comme définit par la revendication 1.

Les revendications dépendantes 2 à 4 définissent des modes d'exécution particuliers du procédé selon l'invention.

L'invention concerne également un récepteur audiovisuel comme définit par la revendication 5. Les revendications dépendantes 6 à 7 définissent des modes d'exécution particuliers du récepteur audiovisuel selon l'invention. D'autres caractéristiques et avantages de l'invention apparaîtront maintenant avec plus de détails dans le cadre de la description qui suit d'exemples de réalisation donnés à titre illustratif en se référant aux figures annexées qui représentent :
- la figure 1 est un diagramme bloc d'un récepteur multimédia pour la mise en oeuvre d'un exemple de réalisation de l'invention,
- la figure 2 présente un exemple d'une apparence d'écran comprenant une barre de menu présentant une liste de chaîne,
- la figure 3 présente une autre apparence d'écran montrant un bouton à l'extrémité de la barre de menu,
- la figure 4 présente un autre exemple d'apparence d'écran comprenant une barre de menu pour le contrôle de la vitesse de reproduction d'un document audiovisuel en cours de réception et d'enregistrement.

On décrit tout d'abord la structure d'un récepteur multimédia 1 muni d'un dispositif d'affichage 2 selon un exemple de réalisation de l'invention. On décrit ici un décodeur mais d'autres appareils sont également envisageables et s'appliquent à la présente invention, par exemple un ordinateur personnel ou un PVR (par exemple le modèle THOMSON DTH7000 produit et commercialisé par la demanderesse) ou tout appareil capable d'accéder à des contenus audiovisuels et disposant de moyens de création et d'affichage de menus. Le récepteur comprend une unité centrale 3 reliée à une mémoire de programme 12, et une interface 5 pour la communication avec un bus numérique à haut débit 6 permettant de transmettre des données audio/vidéo en temps réel. Ce réseau est de préférence public et permet d'accéder à des serveurs distants, le plus courant est le réseau IP. Le récepteur peut également recevoir des données audio/vidéo d'un réseau de diffusion à travers une antenne de réception associée à un démodulateur 4. Le récepteur comprend en outre un récepteur de signaux infrarouge 7 pour recevoir les signaux d'une télécommande 8, une mémoire 9 pour le stockage de contenus audiovisuels et d'une base de données, et une logique de décodage audio/vidéo 10 pour la génération des signaux audiovisuels envoyés à l'écran de télévision 2. La télécommande est dotée des touches de direction ↑, ↓, → et ← et des touches : « OK » et « Select» dont nous verrons plus tard la fonction. La mémoire 9 est avantageusement un disque dur de plusieurs centaines de méga-octets, permettant d'enregistrer plusieurs heures au moins de contenus audiovisuels. Ces contenus audiovisuels sont identifiés par un titre enregistré dans la base de donnée.

Le récepteur comprend également un circuit 11 d'affichage de données sur l'écran, appelé souvent circuit OSD, de l'Anglais "On Screen Display" (signifiant littéralement "affichage sur l'écran"). Le circuit OSD 11 est un générateur de texte et de graphisme qui permet d'afficher à l'écran des menus, des pictogrammes (par exemple, un numéro correspondant à la chaîne visualisée) et qui permet d'afficher les menus de navigation conformément à la présente invention, et notamment une ou plusieurs barre de bouton. Le circuit OSD 11 est contrôlé par l'Unité Centrale 3 et le navigateur 12. Le navigateur 12 est avantageusement réalisé sous la forme d'un module de programme enregistré dans une mémoire morte. Il peut aussi être réalisé sous la forme d'un circuit spécialisé de type ASIC par exemple.

Le bus numérique 6 et/ou le réseau de diffusion transmettent au récepteur des données comprenant des contenus multimédias et des données descriptives de ces contenus. Ces données proviennent soit d'un réseau de diffusion, soit du réseau numérique 6. Les données descriptives comprennent des éléments de classification appelés généralement « attributs », des contenus multimédias accessibles. Les données descriptives sont par exemple des méta-données (ou « metadata » en Anglais) définies selon le standard MPEG7. Ces données sont stockées dans la base de données de la mémoire 9 du récepteur et sont continuellement mises à jour. Le navigateur 12 extrait ensuite les informations de cette base de données et les traite pour réaliser les menus de navigation affichés à l'écran et notamment un ou plusieurs barres de boutons.

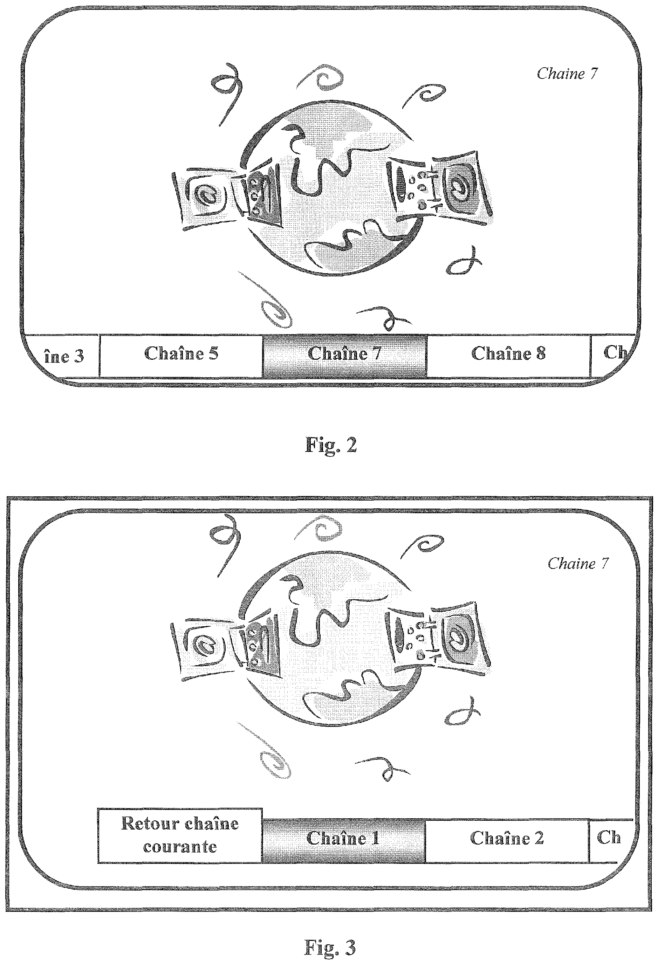

Selon un exemple préféré de réalisation, le navigateur 12 affiche une barre de menu contenant une liste d'attributs associés aux contenus audiovisuels accessible de l'appareil. Cette barre de menu s'affiche en surimpression sur le contenu vidéo précédemment sélectionné par l'utilisateur. La figure 2 montre une apparence d'écran où la barre de menu présente une liste de chaîne. Au moment du lancement du navigateur, le contenu audiovisuel présent en fond d'écran correspond à la chaîne dont l'identificateur dans la barre de menu est mis en évidence. La mise en évidence (on dit aussi qu'un bouton possède le focus) s'effectue par un fond coloré de la case, ou un texte clignotant ou en gras, ou tout autre élément de distinction que les autres cases ou contenus de case n'ont pas. L'utilisateur navigue à l'aide des flèches → et ←, et peut ainsi changer le bouton de la barre qui possède le focus. Si l'utilisateur veut reproduire le contenu de la chaîne sélectionnée, il appuie sur la touche « Select».

Dans le cadre de notre exemple préféré de réalisation, la liste d'attributs contient un bouton de début et un bouton de fin. En début de navigation, le bouton identifiant la chaîne en cours de visualisation est celui qui possède le focus. L'utilisateur démarre sa navigation à partir de ce bouton. En activant toujours la même touche de navigation, l'utilisateur atteint l'un de ces deux boutons de début ou de fin de barre, en l'occurrence la première chaîne de la liste ou la dernière. Si la liste de chaîne est longue, l'identificateur de la chaîne en cours de visualisation n'est plus depuis longtemps dans la barre de menu. Supposons que l'utilisateur n'a pas trouvé ce qu'il cherchait, l'art antérieur enseigne qu'il doit naviguer dans l'autre sens et repasser par les mêmes boutons avant de visualiser ceux qui sont de l'autre coté de la barre en cours de visualisation. Selon un mode préféré de réalisation de la présente invention, le premier et/ou le dernier bouton de la barre affichée permet de sélectionner le bouton correspondant à la chaîne en cours de visualisation et donc de revenir à une position déterminée de la navigation pour continuer ensuite la navigation. Selon un perfectionnement, la barre de bouton comporte à certains endroits des boutons permettant de sélectionner le bouton correspondant à la chaîne en cours de visualisation. Si la navigation est rapide, par exemple en gardant enfoncé le bouton de direction, le saut ne s'effectue pas. Si la vitesse est lente, le saut s'effectue. Une autre façon de faire consiste à sélectionner le bouton et à effectuer le saut en appuyant sur une touche d'activation, la touche « OK » par exemple.

Prenons l'apparence d'écran illustrée par la figure 3, l'utilisateur vient d'appuyer de nombreuses fois sur la flèche de direction ← et le bouton contenant l'identificateur de la première chaîne possède le focus. L'utilisateur ne désire pas la sélectionner, il appuie alors encore une fois sur la flèche de direction ← pour mettre en évidence la case intitulée « Retour chaîne courante ». S'il sélectionne cette case en appuyant sur la touche « Select », il revient à la situation décrite par la figure 2. La sélection de la chaîne courante par le bouton « Retour chaîne courante » déclenche un repositionnement de la barre des chaînes pour présenter la chaîne courante approximativement au milieu de l'écran. A la suite de quoi, en appuyant sur la flèche de direction →, il peut repartir dans la direction opposée à partir de la position de la chaîne courante. En variante, l'activation du bouton possédant le focus s'effectue à la fin d'une temporisation. Par exemple, au bout de 10 secondes sans nouvelle commande de navigation, la chaîne dont l'identificateur possède le focus est activée.

De la même façon, lorsqu'une extrémité de la barre de bouton est visualisée à l'écran, le navigateur rajoute au bout de la barre un dernier bouton intitulé « Retour chaîne courante » qui lui permet comme précédemment de revenir à la position de la chaîne actuellement en cours de visualisation.

D'autres attributs peuvent également être affichés sous la forme d'une liste affichée par une barre de menu. Voici des exemples de liste d'éléments fixés par un fournisseur de contenus pour classifier les contenus disponibles :
langue : anglais, français, allemand, italien, arabe, autres ;
thème : film, information , documentaire, sport, jeu/spectacle, ... ;
sous-thème :
   - film : {aventure, drame, érotique, policier, fiction, autres} ;
   - information : {journal, radio, météo, Bourse, sport, autre} ;
   - contenu : {général, nature, culture, social, histoire} ;
   - jeu/spectacle : {général, variété, cirque, Talk Show, cirque} ;
   - sport : {Général, foot, tennis, basket, athlétisme, nautique} ;
source : TPS, Canal Satellite, DVD salon, magnétoscope, Web. producteur : Spielberg, Coppola, Besson, Kubrick, Truffaud.

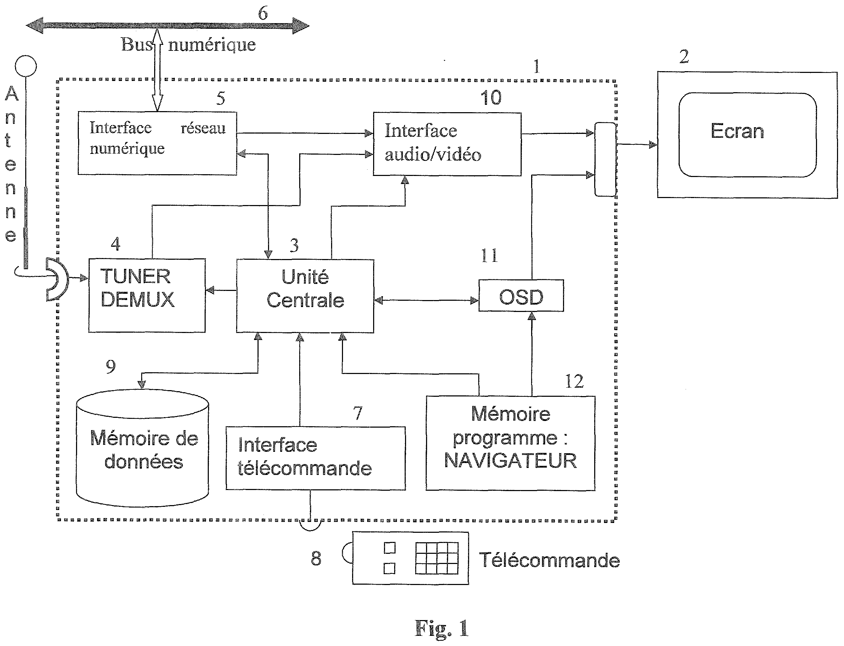

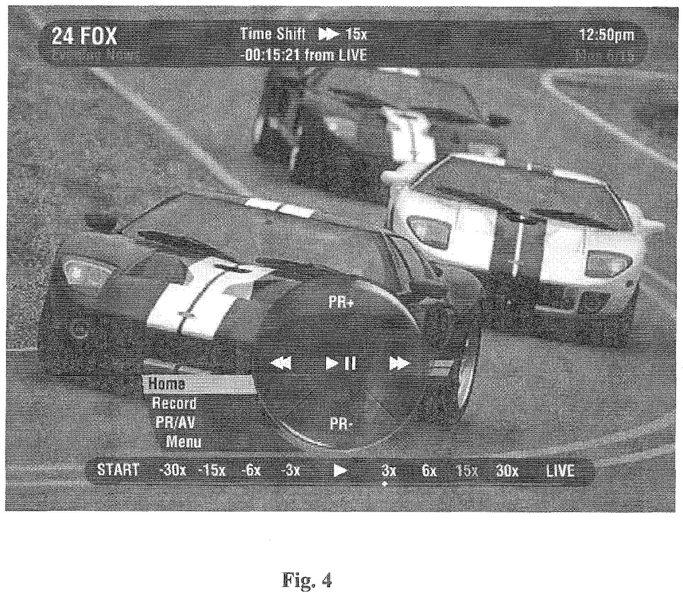

Un autre exemple de réalisation utilisant une barre de bouton selon l'invention concerne la commande des vitesses de reproduction d'un document enregistré. Le récepteur est celui décrit par la figure 1 et le menu affiché est par exemple celui présenté à la figure 4. Un contenu audiovisuel est diffusé sur un canal, et reçu par l'antenne du récepteur 1, démodulé par le démodulateur et visualisé sur l'écran 2. Selon un procédé connu sous le nom de « time shift », littéralement en français « décalage dans le temps », l'utilisateur peut enregistrer le contenu lors de la réception et lire le contenu de la mémoire. De cette façon, l'utilisateur peut voir une partie de l'émission en différé et revenir en arrière pour revoir une séquence qu'il a déjà vue. Il peut aussi faire une pause puis reprendre la lecture du programme en différé. Le procédé « time shift » utilise la mémoire 9 comme mémoire tampon avec un pointeur d'écriture et un pointeur de lecture. Si les deux pointeurs sont à la même position, l'utilisateur visualise le temps présent, appelé « Live ». Si les pointeurs ne sont pas à la même position, l'utilisateur visualise en différé. Dans ce dernier cas, l'utilisateur peut faire varier la vitesse de lecture.

La figure 4 montre une apparence d'écran avec un contenu vidéo en cours d'enregistrement en fond d'écran, une interface utilisateur sous la forme d'un cercle avec quatre commandes accessibles et une barre de menu. Cette interface est particulièrement adaptée à une télécommande possédant un organe de commande avec plusieurs mouvements de liberté, par exemple : pousser, à droite, à gauche, en haut, en bas, tourner à droite, tourner à gauche. La barre de boutons présente plusieurs vitesses de reproduction, soit en reproduisant le document en avant, soit en reproduisant le document en arrière. Si l'utilisateur choisit une vitesse en arrière (ou plus lente que la vitesse normale), le différé augmente progressivement. S'il choisit de reproduire rapidement le document, le différé diminue et le moment du contenu reproduit finit par être celui diffusé au moment présent. La barre de bouton permet de sélectionner les différentes vitesses. La vitesse de référence qui est la vitesse normale est représentée par un bouton au centre de la barre (ayant le dessin d'un triangle pointé à droite : ►). Les boutons des différentes vitesses en avant ou en arrière sont disposés de part et d'autre du bouton de la vitesse de référence. Les vitesses sont définies par un coefficient multiplicateur : « X3 », « X6 », « X15 », ou « X30 », ces identificateurs sont inscrits dans les boutons. A la différence du précédent exemple de réalisation qui permet de sélectionner des chaînes, la vitesse indiquée dans le bouton possédant le focus est directement appliquée au document sans que l'utilisateur ait besoin de valider son choix (par l'appui d'une touche ou de la fin d'une temporisation.

Supposons à un moment donné que le document visualisé ait un léger différé par rapport au direct. Lorsqu'une vitesse autre que la vitesse de référence est choisie, l'écran 2 reproduit les images à la vitesse correspondant au bouton possédant le focus. La sélection d'une vitesse rapide en avant va permettre de revenir au temps présent et ainsi de ne plus utiliser la mémoire tampon 9 pour mémoriser le contenu.

Par contre, si l'utilisateur est très loin en arrière dans le temps, et qu'il désire revenir au moment présent (« Live » en anglais). Il va d'abord accélérer la vitesse de lecture en sélectionnant les vitesses : « X3 », « X6 », « X15 », ou « X30 ». Mais, même à la vitesse maximale le temps pour revenir à la position « Live » est important. Ainsi, pour réduire cette attente et rejoindre le moment présent instantanément, le navigateur affiche au bout de la barre de bouton un élément référencé « LIVE » après la dernière vitesse sélectionnable. Un appui sur la flèche de droite permet de sélectionner un court instant ce bouton. La sélection consiste à la fois à revenir à la vitesse normale et au temps présent, le navigateur positionne le focus sur le bouton correspondant à la vitesse normale. Selon un premier mode de réalisation, le bouton permettant de sauter et mettre le focus ailleurs dans la barre de boutons, n'est pas mis en évidence. Selon une variante, la commande de navigation en direction du bouton permettant de sauter met graphiquement en évidence ledit bouton pendant un temps assez court, typiquement une seconde, puis le saut s'effectue pour mettre graphiquement en évidence le bouton objet du saut. De cette manière, l'utilisateur se rend mieux compte que le passage à ce bouton de saut est temporaire et son objet est de positionner le focus à un autre endroit..

Si par contre l'utilisateur désire revoir le contenu enregistré, il va sélectionner des boutons à gauche de celui représentant la vitesse normale, ce qui va augmenter le différé (lecture en arrière du document). Si l'utilisateur désire revenir au début de l'enregistrement, il peut le faire en accélérant au maximum la lecture en arrière du document, mais cela peut prendre un certain temps. Pour éviter d'attendre trop longtemps, le navigateur a pris soin de placer un bouton à l'extrémité gauche de la barre de menu lui permettant de revenir immédiatement au début de l'enregistrement. Si l'utilisateur partant de la case « -30X » déplace le focus sur cette première case appelée « STAR », le pointeur de lecture se positionne au moment où l'enregistrement à commencé. Le reproduction du document s'effectuant alors à vitesse normale, donc le navigateur positionne le focus sur le bouton marqué par le dessin d'un triangle pointé à droite : ►.

On voit donc que l'installation des deux boutons à l'un et à l'autre bout de la barre de menu permet d'offrir à l'utilisateur l'accès direct à certaines fonctions et de ce fait une navigation plus rapide et efficace.

Bien que la présente invention ait été décrite en référence aux modes de réalisation particuliers illustrés, celle-ci n'est nullement limitée par ces modes de réalisation, mais ne l'est que par les revendications annexées.

## Revendications

1. Procédé de sélection de boutons affichés dans une barre de boutons sur un écran, comportant :
▪ une étape de mise en évidence d'un premier bouton de la barre de boutons;
▪ une étape de réception d'une commande de navigation pour mettre en évidence un second bouton adjacent à celui précédemment mis en évidence,
**caractérisé en ce que**
le second bouton est situé à un bout de la barre de boutons; et
**que** l'étape de réception de la commande de navigation déclenche:
▪ la mise en évidence dudit second bouton pendant un temps donné,
▪ l'activation de ce second bouton après ce temps donné, ce qui déclenche :
• un saut vers un troisième bouton situé à un autre endroit de la barre de boutons,
• la sélection dudit troisième bouton,
• la mise en évidence dudit troisième bouton,
ledit troisième bouton servant de point de départ pour des commandes de navigation ultérieures.

2. Procédé selon la revendication 1, dans lequel la sélection du troisième bouton déclenche une mise à jour du contenu audiovisuel affiché en fond d'écran.

3. Procédé selon la revendication 1 ou 2, dans lequel deux seconds boutons sont disposés respectivement aux deux extrémités de la barre de boutons, la navigation vers ces second boutons déclenchant respectivement la sélection de deux troisièmes boutons différents.

4. Procédé selon l'une des revendications précédentes, dans lequel la réception de la commande de navigation déclenche en outre une étape de repositionnement des boutons de la barre de boutons pour que le troisième bouton ainsi sélectionné soit affiché au milieu de l'écran.

5. Récepteur audiovisuel (1) comprenant un moyen d'affichage (3, 11, 12) pour générer des pages graphiques vers un dispositif d'affichage (2), les pages graphiques comportant au moins une barre de boutons, un moyen de mise en évidence graphique (3, 11, 12) de boutons de la barre de boutons et un moyen de réception (7,8) d'une commande de navigation pour mettre en évidence un second bouton adjacent à un premier bouton de la barre de boutons mis en évidence, **caractérisé en ce que**
le second bouton est situé à un bout de la barre de boutons; et que le moyen de réception (7,8) d'une commande de navigation déclenche :
▪ l'activation du moyen de mise en évidence (3, 11, 12) du second bouton pendant un temps donné,
▪ l'activation de ce second bouton après ce temps donné, ce qui déclenche :
• un saut vers un troisième bouton situé à un autre endroit de la barre de boutons,
• la sélection dudit troisième bouton,
• la mise en évidence graphique dudit troisième bouton par les moyens de mise en évidence graphique,
ledit troisième bouton servant de point de départ pour des commandes de navigation ultérieures.

6. Récepteur selon la revendication 5, dans lequel la sélection du troisième bouton active un moyen d'affichage (3, 10, 12) pour mettre à jour un contenu audiovisuel affiché en fond d'écran.

7. Récepteur selon la revendication 5 ou 6, dans lequel le moyen de réception (7,8) de commande de navigation active le moyen d'affichage (3, 11, 12) pour repositionner les boutons de la barre de boutons afin que le troisième bouton ainsi sélectionné soit affiché au milieu de l'écran.

## Patentansprüche

1. Verfahren zur Auswahl von Schaltflächen, die in einer Schaltflächenleiste auf einem Bildschirm angezeigt werden, umfassend:
▪ einen Schritt zum Anzeigen einer ersten Schaltfläche der Schaltflächenleiste;
▪ einen Schritt zum Empfang eines Navigierungsbefehls, um eine zweite Schaltfläche anzuzeigen, die an die vorher angezeigte Schaltfläche angrenzt,
**dadurch gekennzeichnet, dass**
sich die zweite Schaltfläche an einem Ende der Schaltflächenleiste befindet, und
dass der Schritt zum Empfang des Navigierungsbefehls Folgendes auslöst:
▪ das Anzeigen der besagten zweiten Schaltfläche in einer bestimmten Zeit,
▪ die Aktivierung dieser zweiten Schaltfläche nach dieser bestimmten Zeit, wodurch Folgendes ausgelöst wird:
• ein Sprung hin zu einer dritten Schaltfläche, die sich an einer anderen Stelle der Schaltflächenleiste befindet,
• die Auswahl der besagten dritten Schaltfläche,
• das Anzeigen der besagten dritten Schaltfläche,
wobei die besagte dritte Schaltfläche als Ausgangspunkt für spätere Navigierungsbefehle dient.

2. Verfahren nach Anspruch 1, in welchem durch die Auswahl der dritten Schaltfläche eine Aktualisierung des auf dem Bildschirmhintergrund dargestellten audiovisuellen Inhalts ausgelöst wird.

3. Verfahren nach einem der Ansprüche 1 oder 2, in welchem zwei zweite Schaltflächen jeweils an den zwei äußeren Enden der Schaltflächenleiste angebracht sind,
wobei durch die Navigierung hin zu diesen zweiten Schaltflächen jeweils die Auswahl von zwei dritten unterschiedlichen Schaltflächen ausgelöst wird.

4. Verfahren nach einem der vorstehenden Ansprüche, in welchem durch den Empfang des Navigierungsbefehls unter anderem ein Schritt zur Neupositionierung der Schaltflächen der Schaltflächenleiste ausgelöst wird, damit die so ausgewählte dritte Schaltfläche in der Mitte des Bildschirms dargestellt wird.

5. Audiovisueller Empfänger (1), der ein Mittel zum Anzeigen (3, 11, 12) enthält, um grafische Seiten auf einer Anzeigevorrichtung (2) zu erzeugen, wobei die grafischen Seiten mindestens eine Schaltflächenleiste, ein Mittel zum grafischen Anzeigen (3, 11, 12) von Schaltflächen der Schaltflächenleiste und ein Mittel zum Empfang (7, 8) eines Navigierungsbefehls umfassen, um eine zweite Schaltfläche anzuzeigen, die an eine angezeigte erste Schaltfläche der Schaltflächenleiste angrenzt,
**dadurch gekennzeichnet, dass**
sich die zweite Schaltfläche an einem Ende der Schaltflächenleiste befindet, und dass durch das Mittel zum Empfang (7, 8) eines Navigierungsgerätes Folgendes ausgelöst wird:
▪ die Aktivierung des Mittels zum Anzeigen (3, 11, 12) der zweiten Schaltfläche in einer bestimmten Zeit,
▪ die Aktivierung dieser zweiten Schaltfläche nach dieser bestimmten Zeit, wodurch Folgendes ausgelöst wird:
• ein Sprung hin zu einer dritten Schaltfläche, die sich an einer anderen Stelle der Schaltflächenleiste befindet,
• die Auswahl der besagten dritten Schaltfläche,
• das grafische Anzeigen der besagten dritten Schaltfläche durch die Mittel zum grafischen Anzeigen,
wobei die besagte dritte Schaltfläche als Ausgangspunkt für spätere Navigierungsbefehle dient.

6. Empfänger nach Anspruch 5, in welchem durch die Auswahl der dritten Schaltfläche ein Mittel zum Anzeigen (3, 10, 12) aktiviert wird, um einem auf dem Bildschirmhintergrund dargestellten audiovisuellen Inhalt zu aktualisieren.

7. Empfänger nach Anspruch 5 oder 6, in welchem durch das Mittel zum Empfangen (7, 8) eines Navigierungsbefehls die Mittel zum Anzeigen (3, 11, 12) aktiviert werden, um die Schaltflächen der Schaltflächenleiste neu zu positionieren, damit die so ausgewählte dritte Schaltfläche in der Mitte des Bildschirms dargestellt wird.

## Claims

1. Method for selecting buttons displayed in a button bar on a screen, comprising:
▪ a highlighting step of a first button of the button bar;
▪ a reception step of a navigation command to highlight a second button adjacent to the one previously highlighted,
**characterised in that** the second button is located at one end of the button bar; and that the reception step of the navigation command triggers:
▪ the highlighting of the second button for a given time,
▪ the activation of this second button after this given time, which triggers:
• a skip to a third button located at another place on the button bar,
• the selection of said third button,
• the highlighting of said third button,
said third button being used as a starting point for subsequent navigation commands.

2. Method according to claim 1, wherein the selection of the third button triggers an update of the audiovisual content displayed on the screen background.

3. Method according to claim 1 or 2, wherein two second buttons are arranged respectively at the two ends of the button bar, the navigation to these second buttons respectively triggering the selection of two different third buttons.

4. Method according to one of the previous claims, wherein the reception of the navigation command further triggers a repositioning step of the buttons of the button bar so that the third button thus selected is displayed in the middle of the screen.

5. Audiovisual receiver (1) comprising a display means (3, 11, 12) to generate graphic pages to a display device (2), the graphic pages comprising at least one button bar, a graphic highlighting means (3, 11, 12) of buttons of the button bar and a reception means (7, 8) of a navigation command to highlight a second button adjacent to a first button of the button bar highlighted,
**characterised in that** the second button is located at one end of the button bar; and that the reception means (7, 8) of a navigation command triggers:
▪ the activation of the highlighting means (3, 11, 12) of the second button for a given time,
▪ the activation of this second button after this given time, which triggers:
• a skip to a third button located at another place on the button bar,
• the selection of said third button,
• the graphic highlighting of said third button by the graphic highlighting means,
said third button serving as a starting point for subsequent navigation commands.

6. Method according to claim 5, wherein the selection of the third button activates a display means (3, 10, 12) to update an audiovisual content item displayed on the screen background.

7. Receiver according to claim 5 or 6, in which the navigation command reception means (7, 8) activates the display means (3, 11, 12) to reposition the buttons of the button bar so that the third button thus selected is displayed in the middle of the screen.
